# EUROPEAN PATENT APPLICATION

(11) **EP 4 039 666 A1**
(43) Date of publication of application: **10.08.2022**
(21) Application number: 21155526.3
(22) Date of filing: 05.02.2021
(51) Int. Cl.: C05D 9/00, C05G 5/23

(54) **LIQUID PLANT BIOSTIMULANT COMPOSITIONS CONTAINING SILICON**

(71) Applicant: Maxstim Limited, Farnham, Surrey GU10 1PL (GB)
(72) Inventor: SALVAGE, John Richard, Farnham, Surrey GU10 1RQ (GB); MOORE, Jim, Neath, SA10 9PD (GB)
(74) Representative: Abel & Imray LLP

(57) **Abstract**

The present invention provides a biostimulant stock composition comprising a carrier liquid and a silicate, the composition having a pH of at least 9, the concentration of silicon being from 0.01wt% to 3.0wt%, wherein wt% is measured relative to the total weight of the composition, and one or more of ascorbic acid, tyrosine and phenylalanine. A treatment composition is also provided.

## Description

### Field of the Invention

The present invention relates generally to biostimulant products and methods of treating plants and plant propagation material with biostimulant products. More particularly, but not exclusively, this invention concerns a biostimulant stock composition comprising a silicate, which stock composition may be diluted, typically with water, to provide a biostimulant composition for stimulating plants and/or plant propagation material. The invention also concerns related methods, uses and further products.

### Background of the Invention

Numerous biostimulants have been developed to enhance plant crop productivity. Plant growth rates can be accelerated by using such stimulants.

It has been found that stimulants capable of supplying bioavailable silicon to plants may stimulate growth of plants and the development of plant propagation material (including the germination of seeds). The silicon content of soils can vary dramatically, from less than 1 to 45 % by dry weight (Sommer et al., Silicon pools and fluxes in soils and landscapes - a review, J. Plant Nutrition & Soil Science, 2006, 169:310-329). Elemental silicon, and many other silicon-containing species, cannot be taken up by plants. However, plant roots are generally capable of absorbing silicon in the form of orthosilicic acid [Si(OH)₄], its conjugate base Si(OH)₃O⁻ or relatively small oligomers of the same, when these are present in the surrounding soil. That is, orthosilicic acid, and its conjugate base, are a source of bioavailable silicon. Plant roots are generally not capable of absorbing larger oligomers formed by excessive polymerisation of orthosilicic acid.

Without wishing to be bound by theory, it is thought that, once taken up by a plant, silicon-containing species may reduce stress on the plant. Silicon-containing species may also stimulate water retention in the plant, thereby increasing plant resistance to stresses such as drought. It is also thought, once taken up by a plant, silicon-containing species may improve plant strength and improve plant resistance to pathogens, such as fungal pathogens (Currie et al., Silica in Plants: Biological, Biochemical and Chemical Studies, Ann. Bot., 2007, 100(7): 1383-1389).

US4493725 discloses granules coated with a silicate or silicic acid ester. US2006/0178268 discloses an aqueous solution comprising boric acid and silicic acid in combination, which may be applied to plant crops, for example by spraying on plant leaves or by applying the composition to their roots. US2013/0130902 discloses a composition comprising an alkali metal silicate, which may be used as a biostimulant. WO2014/185794 discloses a composition comprising water-soluble silicon compounds such as silicic acids, potassium silicates, sodium silicates or mixtures thereof, which may be applied to plant crops. WO2012/032364 discloses a composition comprising orthosilicic acid as a source of bioavailable silicon. That composition may be applied to plant crops, for example to increase the resistance of plants to stress such as drought or fungal disease.

The applicants seek to provide an alternative and/or improved stock compositions of silicon that may be diluted to provide a crop-treatment solution. An alternative and/or improved biostimulant composition is also provided.

### Summary of the Invention

The present invention provides, according to a first aspect, a biostimulant stock composition comprising a carrier liquid and a silicate, the composition having a pH of at least 9, the concentration of silicon being from 0.01wt% to 3.0wt%, wherein wt% is measured relative to the total weight of the composition, and one or more of ascorbic acid, tyrosine and phenylalanine.

The applicant has surprisingly found that a biostimulant stock composition comprising a silicate and ascorbic acid may be diluted, typically with water, to provide a biostimulant composition for stimulating plants and/or plant propagation material. Without wishing to be bound by theory, it is believed that orthosilicic acid forms rapidly upon dilution of the biostimulant stock composition. The biostimulant treatment composition of the present invention which may be formed by dilution of the biostimulant stock composition of the first aspect of the present invention is therefore particularly suitable for use as a stimulant for plants and/or plant propagation material, providing a source of bioavailable silicon to plants and plant propagation material. Without wishing to be bound by theory, it is thought that the ascorbic acid facilitates the production of a stock composition having a suitable pH (for example, from 10 to 11).

The biostimulant stock composition of the first aspect of the present invention is optionally an aqueous composition. The biostimulant stock composition of the first aspect of the present invention comprises a carrier liquid. The biostimulant stock composition may comprise a solution, for example (i.e. with components dissolved within the carrier liquid that acts as a solvent). The biostimulant stock composition may comprise undissolved components dispersed in the carrier liquid.

Those skilled in the art will realise that the biostimulant stock composition of the first aspect of the present invention may be diluted to form a biostimulant treatment composition suitable for stimulating plants and/or plant propagation material. Therefore, the biostimulant stock composition does not typically contain any phytotoxic components, or does not contain any components that are phytotoxic when the biostimulant stock composition is diluted appropriately to form a biostimulant treatment composition.

The present invention relates to compositions that may be used to stimulate plants and/or plant propagation material. For the avoidance of doubt, plant propagation material (sometimes referred to herein as "propagation material") includes all plant material suitable for the propagation of plants, including but without limitation seeds, spores, storage organs (including, but not limited to, bulbs, corms, tubers and rhizomes) and cuttings.

As used herein, the term "silicate" encompasses all sources of silicate and silicate derivatives, including, for example, metasilicates, and pyrosilicates. It will be appreciated that silicate anions are often large polymeric molecules with an extensive variety of structures, including chains, rings, double chains and sheets.

Adding a diluent, such as water, to the biostimulant stock composition of the first aspect of the present invention causes the pH of the solution to drop. Without wishing to be bound by theory it is understood that at lower pH orthosilicic acid forms in the solution. The resultant biostimulant treatment composition can then be applied to one or more plants and/or plant propagation materials, optionally by applying the treatment composition to a growth substrate in which the plant(s) and/or plant propagation material(s) is located. The orthosilicic acid and small oligomers thereof in the biostimulant treatment composition is capable of being taken up by plant roots when present in the soil or being taken up by plant leaves when exposed to the treatment composition e.g. as a spray i.e. it is a source of bioavailable silicon.

Without wishing to be bound by theory, it is thought that the ascorbic acid acts as a buffer and/or as a stabiliser that inhibits the orthosilicic acid from excessive polymerising in the biostimulant treatment composition. Further without wishing to be bound by theory, it is believed that the ascorbic acid may act as a stabiliser by associating with the orthosilicic acid molecules and oligomers thereof (for example, by forming hydrogen bonds or other associations with the same) thereby reducing the risk of excessive orthosilicic acid polymerisation. Furthermore, without wishing to be bound by theory, it is thought that the ascorbic acid facilitates the formation of a stock composition of a suitable pH, for example, from 10 to 11. Without wishing to be bound by theory, it is thought that a pH of from 10 to 11 is beneficial for the stock composition because it is sufficiently high to inhibit formation of polymeric orthosilicic acid, but sufficiently low so that excessive dilution is not needed to reduce the pH to lower than 9 in order to form bioavailable orthosilicic acid. Furthermore, a stock composition having a pH of from 10-11 is safer to handle than one having a pH of 14.

The stock composition optionally comprises ascorbic acid and one or both of tyrosine and phenylalanine.

If present, the tyrosine and/or phenylalanine may be present in one or both of L- and D- enantiomers. Both L- and D-enantiomers may assist in inhibiting the formation of undesirably large oligomers of orthosilicic acid, but only L-enantiomers would be useful as a nutrient for a plant or plant propagation material.

The applicant has also found that the biostimulant stock composition may advantageously comprise tyrosine.. Without wishing to be bound by theory, it is thought that tyrosine molecules may act as a stabiliser, for example, interacting with orthosilicic acid molecules and/or with molecules of the conjugate base of orthosilicic acid and/or with oligomers of the same (e.g. by forming ionic complexes) to inhibit the formation of undesirably large oligomers. This interaction with tyrosine may prevent the excessive polymerisation of these orthosilicic acid species, ensuring that silicon in the biostimulant treatment composition remains in a form which can be taken up by plant roots and leaves when the biostimulant treatment composition is applied to plants or propagation material i.e. that silicon in the solution remains in a bioavailable form.

The applicant has found that the biostimulant stock composition advantageously comprises one or more surfactants.

The silicate may be an alkali metal silicate, such as sodium silicate or potassium silicate. The silicon content of the stock composition may optionally be at least 0.02% by weight, optionally at least 0.05% by weight and optionally at least 0.10% by weight. The silicon content of the biostimulant stock composition may optionally be no more than 2.5% by weight, optionally no more than 2.0% by weight, optionally no more than 1.8% by weight, optionally no more than 1.6% by weight, optionally no more than 1.4% by weight and optionally no more than 1.0% by weight. The silicon content of the biostimulant stock composition may be from 0.05 to 1.8% by weight, optionally from 0.10 to 1.5% by weight, optionally from 0.10 to 1.0% by weight, optionally 0.10 to 0.60 % by weight; from 0.15 to 0.60 % by weight; from 0.18 to 0.4 % by weight; from 0.20 to 0.50 % by weight; from 0.22 to 0.50 % by weight; from 0.25 to 0.50 % by weight; from 0.27 to 0.50 % by weight; from 0.30 to 0.50 % by weight; from 0.32 to 0.50 % by weight; from 0.35 to 0.50 % by weight; from 0.37 to 0.50 % by weight; or from 0.40 to 0.47 % by weight. The silicon may optionally be present in an amount of from 0.33 to 0.45% by weight.

As mentioned above, the biostimulant stock composition may comprise ascorbic acid. The ascorbic acid, if present, may be present in an amount of at least 0.1% by weight, optionally at least 0.2% by weight, optionally at least 0.3% by weight, optionally at least 0.4% by weight and optionally at least 0.5% by weight. The ascorbic acid may be present in an amount of up to 10% by weight, optionally up to 8.0% by weight, optionally up to 5.0% by weight, optionally up to 3.0% by weight, optionally up to 3.0% by weight, optionally up to 2.5% by weight, optionally up to 2.2% by weight and optionally up to 2.0% by weight. The ascorbic acid may be present in an amount of from 0.6 to 2.2 % by weight; from 0.7 to 2.1 % by weight; from 0.8 to 2 % by weight; from 0.9 to 2 % by weight; from 1 to 2 % by weight; from 1.1 to 2 % by weight; from 1.2 to 2 % by weight; from 1.3 to 2 % by weight; from 1.4 to 2 % by weight; from 1.5 to 2 % by weight; from 1.6 to 2 % by weight; from 1.7 to 2 % by weight; or from 1.7 to 1.9 % by weight. In a preferred embodiment, the ascorbic acid may be present in an amount of from 1.5 to 2 % by weight. It will be appreciated that the % by weight of the ascorbic acid in the biostimulant stock composition is measured relative to the total weight of the biostimulant stock composition.

As mentioned above, the biostimulant stock composition may comprise tyrosine and/or phenylalanine. The tyrosine and/or phenylalanine may be present in an amount of at least 0.05% by weight, optionally at least 0.10% by weight and optionally at least 0.20% by weight. The tyrosine and/or phenylalanine may be present in an amount of no more than 6.0% by weight, optionally no more than 5.0% by weight, optionally no more than 4.0% by weight, optionally no more than 3.0% by weight and optionally no more than 2.0% by weight. The tyrosine and/or phenylalanine may be present in an amount of from 0.2 to 1.2 % by weight; from 0.3 to 1.2 % by weight; from 0.4 to 1.2 % by weight; from 0.5 to 1.2 % by weight; from 0.6 to 1.2 % by weight; from 0.7 to 1.2 % by weight; from 0.8 to 1.2 % by weight; from 0.8 to 1.1 % by weight; or from 0.9 to 1.1 % by weight. The tyrosine and/or phenylalanine may be present in an amount of from 0.2 to 1.2 % by weight. It will be appreciated that the % by weight of the tyrosine and/or phenylalanine is measured relative to the total weight of the biostimulant stock composition. If the biostimulant stock composition comprises both tyrosine and phenylalanine, the weight % values given above are for the total combined weights of the tyrosine and phenylalanine.

As mentioned above, the biostimulant stock composition may comprise one or more surfactants. The one or more surfactants may comprise any suitable surfactant(s), such as an alkyl polyglycoside (for example, Eucarol-N, Eucarol-S), a polyoxyethylene nonyl phenyl ether (for example, Igepal CO-990), a difunctional block copolymer terminated in primary hydroxyl groups (for example, Pluronic F-38), a polyoxyalkylene, such as a polyoxyethylene-polyoxypropylene (for example, Pluronic F-68) or an alkyl sulphosuccinate (for example, Imbirol OD or Imbirol ODV). Alternatively, one or more surfactant may comprise a phosphate ester, an acyl sarcosine, a lecithin, and a polysorbate. The one or more surfactants may be present in an amount of at least 0.005% by weight, optionally at least 0.006% by weight, optionally at least 0.008% by weight, optionally at least 0.01% by weight, optionally at least 0.02% by weight, optionally at least 0.04% by weight, optionally at least 0.06% by weight and optionally at least 0.08% by weight. The surfactant may be present in an amount of no more than 4.0% by weight, optionally no more than 3.0% by weight, optionally no more than 2.0% by weight, optionally no more than 1.5% by weight, optionally no more than 1.0% by weight and optionally no more than 0.50% by weight. The surfactant may optionally be present in an amount of from 0.1 to 0.4 % by weight; from 0.1 to 0.3 % by weight; or from 0.2 to 0.3 % by weight. The one or more surfactants may optionally be present in an amount of from 0.1 to 0.4 % by weight. It will be appreciated that the % by weight of the one or more surfactants in the biostimulant stock composition is measured relative to the total weight of the biostimulant stock composition. For the avoidance of doubt, if there is more than one surfactant, then the weight % values above relate to the total weight of the surfactants.

The biostimulant stock composition may comprise more than one of (i) ascorbic acid, (ii) one or more surfactants and (iii) tyrosine and/or phenylalanine. The biostimulant stock composition may comprise (i) ascorbic acid and one of (ii) one or more surfactants and (iii) tyrosine and/or phenylalanine. The biostimulant stock composition may comprise (i) a surfactant and one of (ii) ascorbic acid and (iii) tyrosine and/or phenylalanine. The biostimulant stock composition may comprise (i) tyrosine and/or phenylalanine and one of (ii) ascorbic acid and (iii) one or more surfactants. The biostimulant stock composition may comprise (i) ascorbic acid, (ii) one ore more surfactants and (iii) tyrosine and/or phenylalanine. The amounts of each component may be those listed in the statements above. For example, if the aqueous solution comprises (i) ascorbic acid, (ii) one or more surfactants and (iii) tyrosine and/or phenylalanine, then optionally the ascorbic acid may be present in an amount of from 0.6 to 2.2 % by weight; from 0.7 to 2.1 % by weight; from 0.8 to 2 % by weight; from 0.9 to 2 % by weight; from 1 to 2 % by weight; from 1.1 to 2 % by weight; from 1.2 to 2 % by weight; from 1.3 to 2 % by weight; from 1.4 to 2 % by weight; from 1.5 to 2 % by weight; from 1.6 to 2 % by weight; from 1.7 to 2 % by weight; or from 1.7 to 1.9 % by weight; with the one or more surfactants being present in an amount of from 0.1 to 0.4 % by weight; from 0.1 to 0.3 % by weight; or from 0.2 to 0.3 % by weight. The one or more surfactants may optionally be present in an amount of from 0.1 to 0.4 % by weight; with the tyrosine and/or phenylalanine being present in an amount of from 0.2 to 1.2 % by weight; from 0.3 to 1.2 % by weight; from 0.4 to 1.2 % by weight; from 0.5 to 1.2 % by weight; from 0.6 to 1.2 % by weight; from 0.7 to 1.2 % by weight; from 0.8 to 1.2 % by weight; from 0.8 to 1.1 % by weight; or from 0.9 to 1.1 % by weight.

The biostimulant stock composition may comprise a water softener, such as borax. The water softener (optionally borax) may be present in an amount of at least 0.05% by weight, optionally at least 0.08% by weight and optionally at least 0.10% by weight. The water softener (optionally borax) may be present in an amount of no more than 6.0% by weight, optionally no more than 5.0% by weight, optionally no more than 4.0% by weight, optionally no more than 3.0% by weight, optionally no more than 2.0% by weight and optionally no more than 1.5% by weight. The water softener (optionally borax) may optionally be present in an amount of from 0.3 to 1.5 % by weight; from 0.4 to 1.5 % by weight; from 0.5 to 1.5 % by weight; from 0.6 to 1.5 % by weight; from 0.7 to 1.5 % by weight; from 0.8 to 1.5 % by weight; from 0.9 to 1.5 % by weight; from 1 to 1.5 % by weight; from 1 to 1.4 % by weight; or from 1.1 to 1.3 % by weight. The water softener (optionally borax) may be present in an amount of from 0.3 to 1.5 % by weight. It will be appreciated that the % by weight of the borax in the biostimulant stock composition is measured relative to the total weight of the biostimulant stock composition. Without wishing to be bound by theory, it is believed that borax may also inhibit polymerisation of orthosilicic acid.

The biostimulant stock composition optionally comprises a thickener. The thickener may be potassium alginate, for example. The thickener may optionally be present in an amount of at least 0.05% by weight, optionally at least 0.10% by weight and optionally at least 0.15% by weight. The thickener may be present in an amount of no more than 5.0% by weight, optionally no more than 4.0% by weight, optionally no more than 3.0% by weight, optionally no more than 2.0% by weight and optionally no more than 1.5% by weight. The thickener may optionally be present in an amount of from 0.2 to 1.4 % by weight; from 0.4 to 1.4 % by weight; from 0.5 to 1.4 % by weight; from 0.6 to 1.4 % by weight; from 0.7 to 1.4 % by weight; from 0.7 to 1.3 % by weight; from 0.8 to 1.3 % by weight; from 0.8 to 1.2 % by weight; from 0.9 to 1.2 % by weight; or from 0.9 to 1.1 % by weight. The thickener may optionally be present in an amount of from 0.2 to 1.4 % by weight. It will be appreciated that the % by weight of the thickener is measured relative to the total weight of the biostimulant stock composition.

The biostimulant stock composition may comprise one or more weak acids, such as one or more of phosphoric acid, acetic acid, citric acid, salicylic acid, tartaric acid, or fulvic acid, particularly if the biostimulant stock composition does not comprise ascorbic acid. The weak acid, if present, may be present in an amount of at least 0.1% by weight, optionally at least 0.2% by weight, optionally at least 0.3% by weight, optionally at least 0.4% by weight and optionally at least 0.5% by weight. The weak acid may be present in an amount of up to 10% by weight, optionally up to 8.0% by weight, optionally up to 5.0% by weight, optionally up to 3.0% by weight, optionally up to 3.0% by weight, optionally up to 2.5% by weight, optionally up to 2.2% by weight and optionally up to 2.0% by weight. The weak acid may be present in an amount of from 0.6 to 2.2 % by weight; from 0.7 to 2.1 % by weight; from 0.8 to 2 % by weight; from 0.9 to 2 % by weight; from 1 to 2 % by weight; from 1.1 to 2 % by weight; from 1.2 to 2 % by weight; from 1.3 to 2 % by weight; from 1.4 to 2 % by weight; from 1.5 to 2 % by weight; from 1.6 to 2 % by weight; from 1.7 to 2 % by weight; or from 1.7 to 1.9 % by weight. In a preferred embodiment, the weak acid may be present in an amount of from 1.5 to 2 % by weight. It will be appreciated that the % by weight of the weak acid is measured relative to the total weight of the biostimulant stock composition.

The biostimulant stock composition may comprise one or more amino acid, particularly if the solution does not comprise tyrosine or phenylalanine. The one or more amino acid may be present in an amount of at least 0.05% by weight, optionally at least 0.10% by weight and optionally at least 0.20% by weight. The one or more amino acid may be present in an amount of no more than 6.0% by weight, optionally no more than 5.0% by weight, optionally no more than 4.0% by weight, optionally no more than 3.0% by weight and optionally no more than 2.0% by weight. The one or more amino acid may be present in an amount of from 0.2 to 1.2 % by weight; from 0.3 to 1.2 % by weight; from 0.4 to 1.2 % by weight; from 0.5 to 1.2 % by weight; from 0.6 to 1.2 % by weight; from 0.7 to 1.2 % by weight; from 0.8 to 1.2 % by weight; from 0.8 to 1.1 % by weight; or from 0.9 to 1.1 % by weight. The one or more amino acid may be present in an amount of from 0.2 to 1.2 % by weight. It will be appreciated that the % by weight of the one or more amino acid is measured relative to the total weight of the biostimulant stock composition.

The biostimulant stock composition optionally comprises base, such as a hydroxide, such as one or more alkali metal hydroxide, such as one or both of sodium hydroxide and potassium hydroxide. The base may comprise ammonium hydroxide. The composition may comprise at least 0.04wt% base, optionally at least 0.07wt%, optionally at least 0.1wt%, optionally at least 0.2wt%, optionally at least 0.3wt%, optionally at least 0.4wt%, 0.5wt% base, optionally at least 1.0wt% base, based on the weight of the composition. The composition may comprise no more than 5wt% base, optionally no more than 4wt% base, optionally no more than 3wt% base and optionally no more than 2.5wt% base, based on the weight of the composition. The composition may, for example, comprise from 0.1 to 3wt% base and optionally from 0.3 to 2.5wt% base, based on the weight of the composition. The base facilitates the formation of a stock composition of a suitable pH and facilitates the formation of a suitable treatment composition on dilution.

The pH of the biostimulant stock composition may optionally be in a range of from 9 to 14; optionally from 10 to 14; optionally from 10 to 12 and optionally from 10 to 11. The applicant has discovered that it is beneficial for the stock composition to have a pH of from 10 to 11. The stock composition is stable at such a pH in so much as there is no significant formation of unwanted polymeric orthosilicic acid. Furthermore, a stock composition at such a pH requires less diluting liquid in order to reduce the pH below 9 at which the orthosilicic acid become available for uptake. This means that higher concentrations of orthosilicic acid can be achieved in the diluted treatment composition. The presence of ascorbic acid in the stock composition assists in obtaining a stock composition having a pH of from 10 to 11.

The biostimulant stock composition may comprise:
(i) one or more of ascorbic acid, tyrosine and phenylalanine,
(ii) optionally a thickener;
(iii) optionally a water softener;
(iv) optionally one or more surfactants;
(v) optionally one or more base;
the remainder of the weight of the stock composition being made up of carrier liquid.

The biostimulant stock composition may comprise:
(i) ascorbic acid,
(ii) one or both of tyrosine and phenylalanine,
(iii) a thickener;
(iv) a water softener;
(v) one or more surfactants;
(vi) one or more base;
the remainder of the weight of the stock composition being made up of carrier liquid.

According to a second aspect of the invention there is also provided a biostimulant treatment composition for stimulating plants and/or plant propagation material. The biostimulant treatment composition of the second aspect of the present invention is optionally formed, or may be formable, by diluting the biostimulant stock composition of the first aspect of the present invention, optionally by a factor of at least 5:1, optionally at least 10:1, optionally at least 20:1 and optionally at least 30:1, with the first number in the ratio being the volume of diluent and the second number being the volume of stock composition. The treatment composition of the second aspect of the invention may be formed, or may be formable, by diluting the biostimulant stock composition by a factor of up to 500:1, optionally by a factor of up to 400:1, optionally by a factor of up to 300:1. The treatment composition of the second aspect of the invention may be formed, or may be formable, by diluting the biostimulant stock composition of the first aspect of the present invention by a factor of from 10:1 to 500:1, optionally by a factor of from 20:1 to 200:1 and optionally by a factor of up from 30:1 to 100:1. The diluent is optionally aqueous, and is optionally water.

Therefore, the biostimulant treatment composition of the second aspect of the present invention optionally comprises the same components as the biostimulant stock composition of the first aspect of the present invention, but in much reduced amounts. The biostimulant treatment composition of the second aspect of the present invention therefore comprises a composition comprising a silicate, optionally an alkali metal silicate. Like the stock composition of the first aspect of the present invention, the treatment composition of the second aspect of the present invention comprises one or more of ascorbic acid and one or both of tyrosine and phenylalanine, and optionally one or more surfactants.

The concentrations of the various components of the biostimulant treatment composition of the second aspect of the present invention may be determined by reducing the concentrations of the various components in the biostimulant stock composition by a factor such as that discussed above. Therefore, for any minimum value given above in relation to the concentration of a component in the biostimulant stock composition of the first aspect of the present invention, the corresponding minimum concentration in the biostimulant treatment composition of the second aspect of the present invention may be determined by dividing the minimum concentrations shown above for the biostimulant stock composition of the first aspect of the present invention by a maximum dilution factor as discussed above (e.g.500:1,). For any maximum value given above in relation to the concentration of a component in the biostimulant stock composition of the first aspect of the present invention, the corresponding maximum concentration in the biostimulant treatment composition of the second aspect of the present invention may be determined by dividing the maximum concentration shown above for the biostimulant stock composition of the first aspect of the present invention by a minimum dilution factor such as those discussed above (e.g. 30:1).

The pH of the biostimulant treatment composition of the second aspect of the present invention may be no more than 9, optionally no more than 8.0, optionally no more than 7.0 and optionally no more than 6.0. The pH of the biostimulant treatment composition of the second aspect of the present invention may be at least 4.0, optionally at least 5.0 and optionally at least 6.0. The pH should be less than 9 so that the plants and/or plant propagation material can take-up the orthosilicic acid or small oligomers thereof.

The silicate may comprise an alkali metal silicate, such as sodium silicate or potassium silicate. For the avoidance of doubt, various weight percentage values of various components of the biostimlant treatment composition are given. In certain embodiments, the silicon content of the biostimulant treatment composition of the second aspect of the present invention may be from 0.000020% by weight, optionally from 0.000030% by weight, optionally from 0.000060% by weight, optionally from 0.00010% by weight, optionally from 0.00030% by weight and optionally from 0.00050% by weight. The silicon content of the biostimulant treatment composition of the second aspect of the present invention may optionally be no more than 0.30% by weight, optionally no more than 0.20% by weight, optionally no more than 0.15% by weight, optionally no more than 0.10% by weight, optionally no more than 0.08% by weight, optionally no more than 0.04% by weight, optionally no more than 0.020% by weight and optionally no more than 0.010% by weight. The silicon content of the biostimulant treatment composition is optionally from 0.00030 to 0.08 % by weight; optionally from 0.00030 to 0.0204 % by weight; or from 0.00050 to 0.010 % by weight. It will be appreciated that the % by weight of the silicon is measured relative to the total weight of the biostimulant treatment composition.

In certain embodiments, ascorbic acid may optionally be present in the biostimulant treatment composition of the second aspect of the invention in an amount of from 0.0030% by weight, optionally from at least 0.0040% by weight, optionally from at least 0.0075% by weight, optionally from at least 0.0015% by weight and optionally from at least 0.0030% by weight. The ascorbic acid may optionally be present in an amount of no more than 1.0wt%, optionally no more than 0.50% by weight, optionally no more than 0.25% by weight, optionally no more than 0.17% by weight, optionally no more than 0.10% by weight, optionally no more than 0.080% by weight and optionally no more than 0.06% by weight. The ascorbic acid may be present in an amount of from 0.003 to 0.07 % by weight; optionally from 0.003 to 0.06 % by weight; or from 0.003 to 0.05 % by weight, optionally from 0.003 to 0.03.. It will be appreciated that the % by weight of the ascorbic acid is measured relative to the total weight of the biostimulant treatment composition.

The biostimulant treatment composition of the second aspect of the invention may comprise tyrosine and/or phenylalanine. The tyrosine and/or phenylalanine may optionally be present in an amount of at least 0.00014% by weight, optionally of at least 0.00017% by weight, optionally of at least 0.00035% by weight, optionally of at least 0.00070% by weight, optionally of at least 0.0010% by weight, optionally of at least 0.0020% by weight. The tyrosine and/or phenylalanine may optionally be present in an amount of no more than 0.60% by weight, optionally no more than 0.30% by weight, optionally no more than 0.15% by weight, optionally no more than 0.10% be weight, optionally no more than 0.080% by weight, optionally no more than 0.060% by weight, optionally no more than 0.040% by weight and optionally no more than 0.020% by weight. The tyrosine and/or phenylalanine may be present in an amount of from 0.002 to 0.04 % by weight; from 0.004 to 0.04 % by weight and from 0.004 to 0.02 % by weight. In a preferred embodiment, the tyrosine and/or phenylalanine may be present in an amount of from 0.002 to 0.04 % by weight. It will be appreciated that the % by weight of the tyrosine and/or phenylalanine in the aqueous solution is measured relative to the total weight of the biostimulant treatment composition. For the avoidance of doubt, the weight % figures given relate to the total weight of tyrosine and phenylalanine, if both tyrosine and phenylalanine are present.

The biostimulant treatment composition of the second aspect of the invention may comprise borax and alternatively, other water softeners. The borax may optionally be present in an amount of at least 0.0020% by weight, optionally of at least 0.0030% by weight, optionally of at least 0.0060% by weight, optionally of at least 0.010% by weight and optionally of at least 0.012% by weight.. The borax may be present in an amount of from 0.0030 to 0.080 % by weight; from 0.003 to 0.040 % by weight; and from 0.003 to 0.020 % by weight. In a preferred embodiment, the borax may be present in an amount of from 0.003 to 0.05 % by weight. It will be appreciated that the % by weight of the borax is measured relative to the total weight of the biostimulant treatment composition.

The biostimulant treatment composition of the second aspect of the invention may comprise a thickener. The thickener may optionally be present in an amount of at least 0.00010% by weight, optionally of at least 0.00015% by weight, optionally of at least 0.00025% by weight, optionally of at least 0.00050% by weight, optionally of at least 0.0010% by weight, optionally of at least 0.0020% by weight, and optionally at least 0.0030% by weight. The thickener may optionally be present in an amount of no more than 0.60% by weight, optionally no more than 0.30% by weight, optionally no more than 0.15% by weight, optionally no more than 0.10% be weight, optionally no more than 0.080% by weight, optionally no more than 0.060% by weight, optionally no more than 0.040% by weight and optionally no more than 0.020% by weight. The thickener may be potassium alginate. The thickener may be present in an amount of from 0.002 to 0.05 % by weight; from 0.003 to 0.04 % by weight; from 0.003 to 0.02 % by weight and optionally from 0.003 to 0.010 % by weight. In a preferred embodiment, the thickener is present in an amount of from 0.002 to 0.05 % by weight. It will be appreciated that the % by weight of the thickener is measured relative to the total weight of the biostimulant treatment composition.

The biostimulant treatment composition of the second aspect of the invention may comprise one or more surfactants. The one or more surfactants may comprise any suitable surfactant(s), such as an alkyl polyglycoside (for example, Eucarol-N, Eucarol-S), a polyoxyethylene nonyl phenyl ether (for example, Igepal CO-990), a difunctional block copolymer terminated in primary hydroxyl groups (for example, Pluronic F-38), a polyoxyalkylene, such as a polyoxyethylene-polyoxypropylene (for example, Pluronic F-68) or an alkyl sulphosuccinate (for example, Imbirol OD or Imbirol ODV). Alternatively, the one or more surfactants may comprise one or more of a phosphate ester, an acyl sarcosine, a lecithin, and a polysorbate. The one or more surfactants may optionally be present in an amount of at least 1.6x10⁻⁵% by weight, optionally at least 2.0x10⁻⁵% by weight, optionally at least 4.0x10⁻⁵% by weight, optionally at least 8.0x10⁻⁵% by weight, optionally at least 1.0x10⁻⁴% by weight, optionally, optionally at least 2.0x10⁻⁴% by weight, optionally at least 4.0x10⁻⁴% by weight, optionally at least 6.0x10⁻⁴% by weight and optionally at least 8.0x10⁻⁴% by weight, and optionally at least 0.0010% by weight. The one or more surfactants may optionally be present in an amount of no more than 0.40% by weight, optionally no more than 0.20% by weight, optionally no more than 0.10% by weight, optionally no more than 0.070% by weight, optionally no more than 0.050% by weight, optionally no more than 0.030% by weight, optionally no more than 0.020% by weight and optionally no more than 0.010% by weight. The one or more surfactants may optionally be present in an amount of from 0.0010 to 0.020 % by weight and optionally from 0.001 to 0.01 % by weight. In a preferred embodiment, the surfactant is present in an amount of from 0.0010 to 0.020 % by weight. It will be appreciated that the % by weight of the surfactant is measured relative to the total weight of the biostimulant treatment composition.

The biostimulant treatment composition of the second aspect of the invention may comprise base. The treatment composition may comprise at least 0.0001wt% base, optionally at least 0.0004wt% base, optionally at least 0.001wt% base, optionally 0.003wt% base and optionally at least 0.005wt% base. The treatment composition may comprise no more than 0.2wt% base, optionally no more than 0.15wt% base, optionally no more than 0.1wt% base and optionally no more than 0.05wt% base, based on the weight of the treatment composition.

The biostimulant treatment composition of the second aspect of the present invention may comprise more than one of (i) ascorbic acid, (ii) one or more surfactants and (iii) tyrosine and/or phenylalanine. For example, the biostimulant treatment composition of the second aspect of the present invention may comprise ascorbic acid, a surfactant and one or both of tyrosine and/or phenylalanine.

The biostimulant treatment composition of the second aspect of the present invention may, for example, comprise one or more amino acid (optionally in the absence of tyrosine and phenylalanine) and a weak acid (optionally in the absence of ascorbic acid). The amounts of such components may be readily determined by reducing the amounts of such components as described above in relation to the biostimulant stock composition of the first aspect of the present invention by a dilution factor as discussed above.

According to a third aspect of the present invention, there is provided a method of making a biostimulant treatment composition, the method comprising adding a diluent to the biostimulant stock composition of the first aspect of the present invention.

The diluent may be used to dilute the biostimulant stock composition of the first aspect of the present invention by a factor of at least 5, optionally at least 10, optionally at least 15, optionally at least 20, optionally at least 25 and optionally at least 30.

The diluent may be used to dilute the biostimulant stock composition of the first aspect of the present invention by a factor of no more than 500, optionally no more than 400, optionally no more than 300, optionally no more than 200, optionally no more than 150 and optionally no more than 100.

The diluent may be aqueous. The diluent may be water. It will be appreciated that the diluent may be ordinary tap water or harvested water, such as rain water. The source of water used to dilute the biostimulant stock composition may have a pH of from 5.0 to 9.0, preferably from 6.0 to 8.0, more preferably from 6.5 to 7.5. It will be appreciated that the source of water used to dilute the biostimulant stock composition need not be potable water.

According to a fourth aspect of the invention, there is provided a method of treating an area comprising one or more plants and/or plant propagation material, the method comprising applying to said area a biostimulant treatment composition in accordance with the second aspect of the present invention. The one or more plants or plant propagation material may comprise, or be derived from, a monocotyledon, such as ryegrass, or a dicotyledon, such as lettuce. The method may comprise applying the biostimulant treatment composition to one or more plants or plant propagation material, and/or to substrate in which the one or more plants or plant propagation material is located. In this case, the biostimulant treatment composition contacts the plants or propagation material.

The method may comprise applying the biostimulant treatment composition to a growth medium. In this case, the biostimulant treatment composition contacts the growth medium. The growth medium may be any suitable plant growth medium.

The method may comprise applying the biostimulant treatment composition to one or more plants or plant propagation material, and growth medium.

The biostimulant treatment composition may be provided as a wash or spray, for example.

The method may comprise applying biostimulant treatment composition to individual growth receptacles or pots.

The method may comprise adding the biostimulant stock composition to an irrigation supply or soil drench.

The method may comprise applying from 0.25 to 40 litres of the biostimulant treatment composition of the second aspect of the present invention per hectare of the area. The method may optionally comprise applying from 1 to 10 litres, optionally from 2 to 9 litres, optionally from 3 to 8 litres, optionally from 3 to 7 litres, optionally from 3 to 6 litres and optionally from 3 to 5 litres of the biostimulant treatment composition of the second aspect of the present invention per hectare of the area.

The method may comprise applying a biostimulant treatment composition in accordance with the second aspect of the present invention to the area at least once every three years, optionally at least once every two years, optionally at least once every year, optionally at least once every nine months, optionally at least once every six months, optionally at least once every four months, optionally at least once every three months, optionally at least once every two months, optionally at least once a month and optionally more than once per month.

It will, of course, be appreciated that features described in relation to one aspect of the present invention may be incorporated into other aspects of the present invention. For example, the biostimulant treatment composition of the second aspect of the present invention may incorporate any of the features described with reference to the method of the third aspect of the present invention and *vice versa.*

Embodiments of the present invention will now be described by way of example only.

### Example 1

An example of an embodiment of a biostimulant stock composition in accordance with the first aspect of the present invention was prepared comprising:
120g borax (Brenntag);
500ml of sodium silicate (30-40wt% solution, Mineral Waters Limited);
100g of L-tyrosine (Bulk Powders);
100g potassium alginate (Ingredients UK)
180g ascorbic acid (Brenntag);
20ml of Eucarol surfactant (Lamberti SpA); and
60g potassium hydroxide flakes (the flakes being 90% by weight KOH, Brenntag)

The volume was made up with ordinary tap water to 10 litres, to provide a 10-litre batch of biostimulant stock composition. The stock composition was in the form of a solution.

Five such batches of the stock composition were made as set-out above. The pH of each stock composition was measured as a function of storage time at room temperature. The average (mean) pH of the batches immediately after manufacture was 10.6. At the end of 12 months, the pH of all stock compositions remained within a range of from 10.4 to 10.8. This indicates that the pH of each stock composition was stable. This is important because if the pH of the composition drops appreciable (for example, below 9.0), then an unwanted degree of polymerisation of orthosilicic acid species may occur. Extensively polymerised orthosilicic acid is not taken-up by plants.

The stock composition is typically stored, transported and sold in containers of a convenient size for consumer use. For example, the stock composition is provided in a container having a volume of from 0.5 to 50 litres, but may be any suitable size, such as from 5 to 40 litres, from 5 to 30 litres, from 5 to 20 litres, or from 5 to 15 litres. The container is typically plastic but may be made from any suitable material.

### Example 2

A further example of a biostimulant stock composition in accordance with the first aspect of the present invention will now be described. The biostimulant stock composition comprised:
95g borax (Brenntag);
400ml of sodium silicate (30-40wt% solution, Mineral Waters Limited);
75g of L-tyrosine (Bulk Powders);
50g potassium alginate (Ingredients UK)
145g ascorbic acid (Brenntag);
20ml of Eucarol surfactant (Lamberti SpA); and
25g potassium hydroxide flakes (the flakes being 90% by weight KOH, Brenntag)

The volume was made up with ordinary tap water to 10 litres, to provide a 10-litre batch of biostimulant stock composition. The stock composition was in the form of a solution.

### Example 3

Another example of a biostimulant stock composition in accordance with the first aspect of the present invention will now be described. The biostimulant stock composition comprised:
145g borax (Brenntag);
650ml of sodium silicate (30-40wt% solution, Mineral Waters Limited);
120g of L-tyrosine (Bulk Powders);
140g potassium alginate (Ingredients UK)
225g ascorbic acid (Brenntag);
40ml of Eucarol surfactant (Lamberti SpA); and
120g potassium hydroxid flakes (the flakes being 90% by weight KOH, Brenntag)

The volume was made up with ordinary tap water to 30 litres, to provide a 30-litre batch of biostimulant stock composition. The stock composition was in the form of a solution.

### Example 4

Ten cylindrical pots, each pot having a cross-sectional diameter of 9.5 centimetres, were filled with soil and were then sown with 4g rye grass seeds spread evenly on the surface

The 10-litre biostimulant stock composition of Example 1 was diluted with ordinary tap water by a dilution factor of 100, to provide an example of an embodiment of a biostimulant treatment composition in accordance with the second aspect of the present invention. The pH of the diluted solution was less than 9.

6ml of the biostimulant treatment composition were applied using a spray bottle to each of five of the potsn (the trial group pots).
The remaining five pots formed a control group (the control group pots). 6ml of ordinary tap water were applied using a spray bottle to each of the five control group pots.

The treatments mentioned above were repeated weekly for a period of three weeks.

The rye grass seeds in the trial group pots germinated more quickly on average than the rye grass seeds in the control group pots.

Four weeks after the rye grass seeds were planted, the total weight of the leaves of the rye grass in each pot was measured. The rye grass in the trial group pots demonstrated a greater average increase in leaf weight (which is a measure of biomass) over time than the rye grass in the control group pots, as illustrated in Table 1.

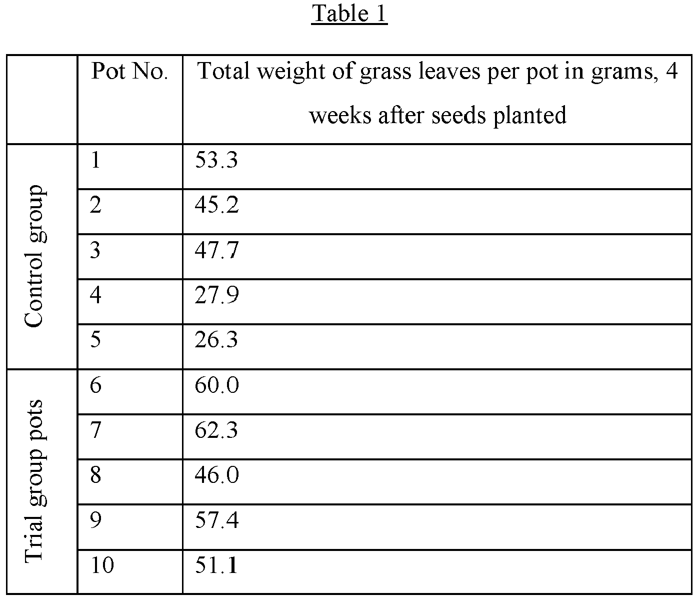

Table 2 illustrates the average total weight of the grass leaves per pot in grams, four weeks after the seeds were planted, in each of the trial group pots and the control group pots:

**Table 2**

| Group of pots | Average total weight of grass leaves per pot in grams, 4 weeks after seeds planted |
|---|---|
| Control group pots | 40.1 |
| Trial group pots | 55.4 |

The rye grass in the trial group pots demonstrated an average total increase in grass leaf weight per pot in grams that was 38 % greater than that of the rye grass in the control group pots. It was also observed that the leaves of the rye grass plants in the trial group pots were more physically robust, being visibly more upright than the leaves of the rye grass plants in the control group pots.

### Example 5

The biostimulant stock compositions of Examples 2 and 3 were diluted by a factor of 100 to provide two examples of biostimulant treatment compositions in accordance with the second aspect of the present invention. The two biostimulant treatment compositions were each used to treat five pots containing rye grass seeds substantially as described above in relation to Example 4. Rye grass treated with either of the biostimulant treatment compositions showed better germination, greater homogeneity, and faster plant development than were shown by rye grass treated with tap water only. The biomass from five pots of control was 25g, from five pots treated with the treatment composition derived from the stock composition of Example 3 was 38g and from five pots treated with the treatment composition derived from the stock composition of Example 2 was 29g, demonstrating that the biostimulant treatment compositions of the present invention are effective for plants such as rye grass.

### Example 6

The biostimulant stock compositions of Examples 2 and 3 were diluted by a factor of 100 to provide two examples of biostimulant treatment compositions in accordance with the second aspect of the present invention (hereinafter "F1" and "F2", respectively). The two biostimulant treatment compositions and that described above in relation to Example 1 (hereinafter "F3") were each used to treat five pots containing lettuce seeds. Table 3 below shows the number of plants that germinated after 5days.

**Table 3 - number of lettuce plants germinated in relation to treatment**

| Treatment | No. of lettuce plants that germinated |
|---|---|
| Biostimulant treatment composition F1 | 11 |
| Biostimulant treatment composition F2 | 14 |
| Biostimulant treatment composition F3 | 16 |
| Tap water (control) | 2 |

Treatment of the lettuce plants was continued. The plants treated with the control appeared to be, on average, smaller than the plants treated with the biostimulant treatments compositions F1, F2 and F3.

Table 3 clearly demonstrates the efficacy of treatment using biostimulant treatment compositions in accordance with the present invention.

### Example 7

A stock composition was made in accordance with Example 1 above and stored at ambient temperature for 6 months. The pH of the stock solution when made was 10.6. The pH after 6 months was 10.4, and therefore there was no appreciable decrease in pH of the stock solution over a six month period. A further identical stock composition was made and stored at ambient temperature for 2 days. The pH of the stock solution when made was 10.4. This did not change after 2 days' storage.

Both stock compositions were diluted by a factor of 100, and the resultant treatment compositions were sprayed on to the surface of a growth substrate in 5 pots, with 4g of ryegrass seeds being sown on the surface of the growth substrate of each pot. Further treatments were applied after 7 days and after 14 days. After 4 weeks the plants were harvested and the biomass determined. Comparisons with a water control were made. Biomass increased by 29% (54g for the treated pots compared to 42g for the control pots) when treated with the treatment composition obtained from the stock composition that had been stored for 6 months. Biomass increased by 26% (53g for the treated pots compared to 42g for the control pots) when treated with the treatment composition obtained from the stock composition that had been stored for 2 days. This demonstrates that exemplary stock compositions according to embodiments of the present invention may be stable over long periods of time, and form effective treatment compositions on dilution after storage.

### Illustrative Example 1

An illustrative example of a treatment composition was made by mixing various amounts of ascorbic acid with water. Various amounts of ascorbic acid were added from 5 to 25g/litre of treatment composition, and rye grass was treated with the treatment composition. Treatment compositions of 5-20g/litre were found to be more effective than the control, which did not contain any ascorbic acid. In this case, the treatment composition comprising 8g/litre (0.8wt%) of ascorbic acid was found to be the most effective treatment composition. This Example demonstrates that ascorbic acid alone facilitates an effective treatment composition. The applicant acknowledges that the amount of ascorbic acid used in Example 7 is relatively high compared to the other examples, but in the other examples, there are other components that contribute to the effective performance of the treatment composition.

### Illustrative Example 2

A further illustrative example of a treatment composition was made by mixing water and plant amino acid extracts. The treatment composition was effective when compared to a control without the plant amino acid extracts.

The examples above demonstrate the application of a biostimulant treatment composition to seeds and to plants. Those skilled in the art will realise that the biostimulant treatment composition of the present invention may be used with different plant propagation material.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A biostimulant stock composition comprising a carrier liquid and a silicate, the composition having a pH of at least 9, the concentration of silicon being from 0.01wt% to 3.0wt%, wherein wt% is measured relative to the total weight of the composition, and one or more of ascorbic acid, tyrosine and phenylalanine.

2. A stock composition according to claim 1, the silicon content of the stock composition being from 0.05 to 1.8% by weight of the composition.

3. A stock composition according to claim 1 or claim 2 comprising ascorbic acid, the ascorbic acid being present in an amount of from 0.1% to 10% by weight of the composition.

4. A stock composition according to any preceding claim comprising one or both of tyrosine and phenylalanine, optionally wherein one or both of tyrosine and phenylalanine, if present, are L-enantiomers, optionally wherein the tyrosine and/or phenylalanine is present in an amount of from 0.05% to 6.0% by weight of the composition.

5. A stock composition according to any preceding claim comprising one or more surfactants, wherein the one or more surfactants is optionally present in an amount of from 0.005% to 4.0% by weight of the composition.

6. A stock composition according to any preceding claim comprising a water softener and/or a thickener, wherein if the water softener is present, it is optionally present in an amount of from 0.05% to 6.0% by weight of the composition, and wherein if the thickener is present, it is optionally present in an amount of from 0.05% to 5.0% by weight of the composition.

7. A stock composition according to any preceding claim comprising one or more weak acid, not including ascorbic acid and optionally comprising one or more amino acid, not including tyrosine or phenylalanine.

8. A stock composition according to any preceding claim comprising one or more base, optionally comprising sodium hydroxide and/or potassium hydroxide, wherein the pH of the biostimulant stock composition is in a range of from 10 to 14, optionally from 10 to 11.

9. A stock composition according to any preceding claim comprising:
(i) ascorbic acid,
(ii) one or both of tyrosine and phenylalanine,
(iii) a thickener;
(iv) a water softener;
(v) one or more surfactants; and
(vi) one or more base;
the remainder of the weight of the stock composition being made up of carrier liquid.

10. A biostimulant treatment composition for stimulating plants and/or plant propagation material being formed, or formable, by diluting the biostimulant stock composition of any preceding claim.

11. A biostimulant treatment composition according to claim 10 wherein the stock composition of any of claims 1 to 9 is diluted by a factor of from 5:1 to 500:1, the first number in the ratio being the volume of diluent and the second number being the volume of stock composition.

12. A biostimulant treatment composition according to claim 10 or claim 11
wherein the pH of the biostimulant treatment composition is no more than 9.

13. A biostimulant treatment composition according to any of claims 10 to 12
wherein the silicon content of the biostimulant treatment composition is from 0.000020% to 0.30% by weight of the treatment composition,
wherein the treatment composition optionally comprises ascorbic acid, which, if present, is present in the biostimulant treatment composition in an amount of from 0.0030% to 1.0% by weight of the composition;
wherein the treatment composition optionally comprises one or both of tyrosine and/or phenylalanine, wherein, if present, the tyrosine and/or phenylalanine are present in an amount of from 0.00014% to 0.6% by weight of the composition;
wherein the treatment composition optionally comprises a water softener,
which, if present, is present in an amount of from 0.0020% to 0.08% by weight of the composition;
wherein the treatment composition optionally comprises a thickener, which, if present, is present in an amount of from 0.00010% to 0.6% by weight of the composition; and
wherein the treatment composition optionally comprises one or more surfactants, which, if present, is present in an amount of from 1.6x10⁻⁵% to 0.40% by weight of the composition.

14. A method of making a biostimulant treatment composition according to any of claims 10 to 13, the method comprising adding a diluent to the biostimulant stock composition of any of claims 1 to 9.

15. A method of treating an area comprising one or more plants and/or plant propagation material, the method comprising applying to said area a biostimulant treatment composition in accordance with any of claims 10 to 13, the method comprising applying the biostimulant treatment composition to one or more plants or plant propagation material, and/or applying the biostimulant treatment composition to a growth medium.
